Europäisches Patentamt

European Patent Office

Office européen des brevets

(11) Veröffentlichungsnummer: **0 199 113**
**A2**

## (12) EUROPÄISCHE PATENTANMELDUNG

(21) Anmeldenummer: **86103962.6**

(22) Anmeldetag: **22.03.86**

(51) Int. Cl.⁴: **A 01 B 15/02**
**A 01 B 17/00**

(30) Priorität: **18.04.85 DE 3513989**

(43) Veröffentlichungstag der Anmeldung:
**29.10.86 Patentblatt 86/44**

(84) Benannte Vertragsstaaten:
**FR NL**

(71) Anmelder: **Rabewerk Heinrich Clausing**

**D-4515 Bad Essen 1(DE)**

(72) Erfinder: **Schröer, Friedrich, Dipl.-Ing.**
**Im Weidengrund 5**
**D-4515 Bad Essen 1(DE)**

(74) Vertreter: **Missling, Arne, Dipl.-Ing. et al,**
**Patentanwälte Dipl.-Ing. R. Schlee Dipl.-Ing. A. Missling**
**Bismarckstrasse 43**
**D-6300 Giessen(DE)**

(54) **Zusatzpflugkörper für Drehpflüge.**

(57) Ein Zusatzpflugkörper für Drehpflüge für die Verbreiterung der vom letzten Pflugkörper des Drehpfluges geschnittenen Furche ist an einem Arm (8) befestigt, der seinerseits über eine Schwenkachse (9) an dem Pflugrahmen (11) des Drehpfluges anschließbar ist. Der Schwenkbereich des Armes (8) ist durch Anschläge (14, 15; 26, 27; 28) begrenzt, die die Arbeitsstellung des Zusatzpflugkörpers (3) bestimmen. Der Zusatzpflugkörper schwenkt beim Wenden der Pflugkörper (22) des Drehpfluges selbsttätig von der einen in die andere Arbeitsstellung, wobei die Arbeitsflächen des Schneidwerkzeuges (6) für beide Arbeitsrichtungen ausgelegt sind.

Fig. 3

EP 0 199 113 A2

Rabewerk Heinrich Clausing
4515 Bad Essen 1

Zusatzpflugkörper für Drehpflüge

Die Erfindung betrifft einen Zusatzpflugkörper für Drehpflüge für die Verbreiterung der vom letzten Pflugkörper
des Drehpfluges geschnittenen Furche.

Für verschiedene Anwendungsfälle ist es vorteilhaft,
wenn die vom letzten Pflugkörper gezogene Furche verbreitert wird, so z.B., wenn Schlepper benutzt werden,
die mit überbreiten Reifen ausgestattet sind. Für das
Pflügen ist es wesentlich vorteilhafter, mit einer Reifenseite in der Furche zu fahren. Für die Verbreiterung
der letzten Furche wird ein Pflugkörper eingesetzt, der
nicht bis auf die Furchensohle der letzten Furche schneidet, sondern in einem etwas höheren Niveau, wobei der abgeschnittene Erdbalken in die letzte Furche eingeworfen
wird. Die Tiefe der vom Zusatzpflugkörper geschnittenen
Furche ist dabei so bemessen, daß das abgeschnittene Erdreich die letzte Furche in etwa bis zu diesem Niveau auffüllt, so daß die Schlepperräder einen ebenen und

-2-

ausreichend breiten Furchengrund vorfinden. Ein Zusatzpflugkörper der eingangs genannten Art kann auch dafür verwendet werden, um die letzte Furche am Feldrand zu ziehen, d.h. um als Grenzpflugkörper zu dienen. Hierbei wird vorteilhaft der Pflugkörper bis in die gleiche Tiefe schneiden, wie dies beim letzten Pflugkörper des Pfluges der Fall ist. Will man bei Drehpflügen derartige Zusatzpflugkörper anbringen, so ist für jede Pflügrichtung ein Zusatzpflugkörper erforderlich.

Der Erfindung liegt die Aufgabe zugrunde, einen Zusatzpflugkörper für Drehpflüge der eingangs genannten Art so auszubilden, daß ein Zusatzpflugkörper sowohl für die Verbreiterung der bzw. zum Ziehen einer letzten Furche für beide Pflügrichtungen ausreichend ist.

Diese Aufgabe wird mit den Merkmalen des kennzeichnenden Teils des Anspruches 1 gelöst.

Ein erfindungsgemäß ausgebildeter Zusatzpflugkörper ist an einem Arm befestigt, der seinerseits über eine Schwenkachse am hinteren Ende des Pflugrahmens angeschlossen ist. Der Schwenkbereich des Armes ist durch Anschläge begrenzt, die vorteilhaft einstellbar ausgebildet sind. Die Anschläge definieren die jeweilige Arbeitsstellung des Pflugkörpers. Der Arm kann sowohl hinten als auch vorn herum schwenken, wobei bei einer Schwenkung nach vorn kein Klinkwerk erforderlich ist, damit der Arm in seiner Arbeitsstellung gehalten wird. Der Pflugkörper ist symmetrisch ausgebildet und somit für beide Pflügrichtungen einsetzbar. Im einfachsten Fall ist der Pflugkörper als Scheibe ausgebildet, wobei diese Scheibe vorteilhaft um eine Achse am Arm drehbar angeordnet ist.

Der Wechsel der Arbeitsrichtung des Zusatzpflugkörpers erfolgt selbsttätig mit dem Wenden des Drehpfluges. Wenn der Zusatzpflugkörper nach vorn durchschwenkt, so löst sich der Arm vom Anschlag beim Ausheben des Pflugkörpers und schwenkt dann synchron mit der Drehbewegung des Pfluges von der einen in die andere Arbeitsstellung und legt sich hier nach dem Absenken des Pflugrahmens wieder an den gegenüberliegenden Anschlag an. Der Vorteil dieser Anbringung des Pflugkörpers besteht darin, daß ein schlagfreies Drehen erfolgt, während bei einem hinten Herumdrehen des Pflugkörpers ein Klinkwerk erforderlich ist, das den Arm des Zusatzpflugkörpers in der Arbeitsstellung verriegelt. Die Freigabe erfolgt wiederum selbsttätig beim Drehen des Pflugrahmens, wobei das Verschwenken des Zusatzpflugkörpers etwas der Drehbewegung des Pflugrahmens nachläuft. Hierdurch rastet der Arm mit etwas Schwung ein und wird dann vom Klinkwerk in seiner anderen Arbeitsstellung gehalten.

Weitere vorteilhafte Ausgestaltungen der Erfindung gehen aus den Unteransprüchen in Verbindung mit Beschreibung und Zeichnung hervor.

Ein Ausführungsbeispiel der Erfindung ist im folgenden anhand der Zeichnung näher beschrieben, in dieser zeigen:

Fig. 1 die von einem erfindungsgemäßen Zusatzpflugkörper für überbreite Schlepperreifen verbreiterte letzte Furche,

Fig. 2    eine Ansicht eines Ausführungsbeispiels eines Zusatzpflugkörpers,

Fig. 3    eine Draufsicht auf das in Fig. 2 gezeigte
Ausführungsbeispiel,

Fig. 4    ein Detail eines weiteren Ausführungsbeispiels gemäß der Erfindung,

Fig. 5    einen durch ein Klinkwerk gehaltenen Zusatzpflugkörper,

Fig. 6    eine Seitenansicht eines weiteren Ausführungsbeispiels gemäß der Erfindung und

Fig. 7    ein Ausführungsbeispiel eines erfindungsgemäßen Zusatzpflugkörpers mit feststehendem,
symmetrisch ausgebildetem Streichblech.

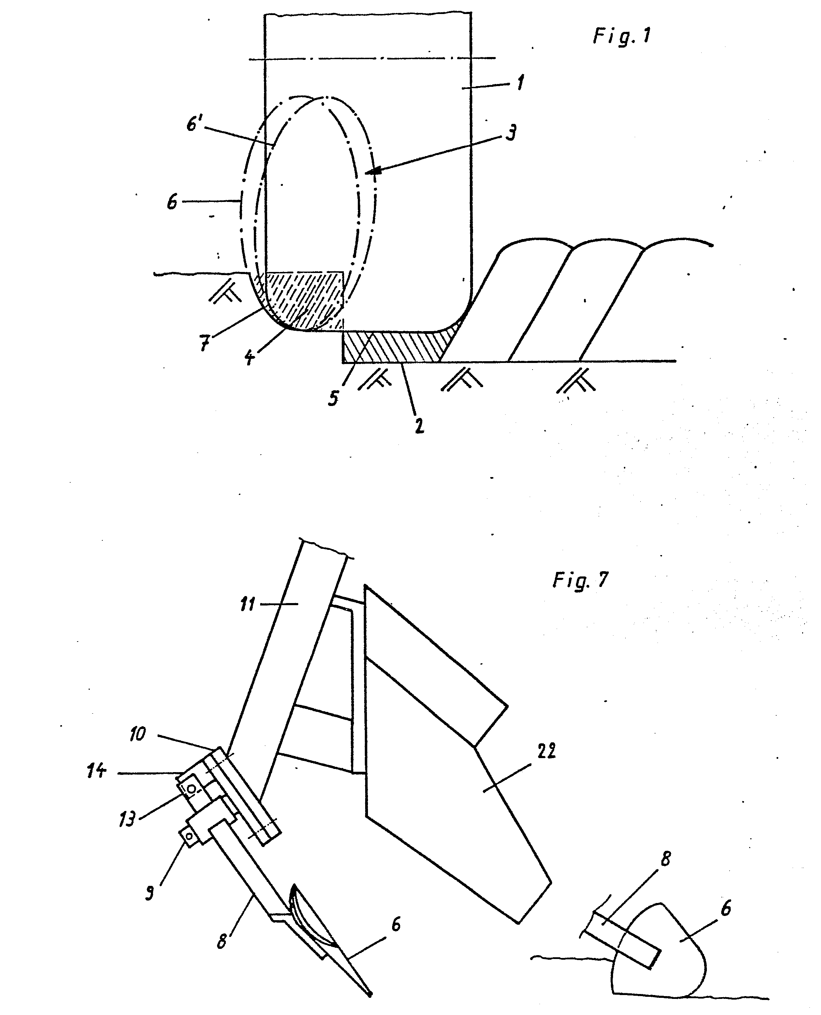

In Fig. 1 ist der überbreite Schlepperreifen 1 eines nicht
weiter dargestellten Schleppers dargestellt. Dieser Schlepperreifen 1 ist breiter als die vom letzten Pflugkörper gezogene Furche 2, so daß der Schlepperfahrer gezwungen wäre,
auf dem ungepflügten Land zu fahren. Durch die Verwendung
eines Zusatzpflugkörpers 3 wird die Furche 2 verbreitert,
und zwar um den Bereich 4, wobei die vom Zusatzpflugkörper 3
geschnittene Erde in die Furche 2 gefördert wird und diese
bis zu dem Niveau 5 auffüllt. Vorteilhaft ist der Zusatzpflugkörper mit einem Schneidwerkzeug 6 versehen, das eine
abgerundete Furchenkante 7 schafft, so daß eine gute seitliche Führung für den Schlepperreifen 1 gegeben ist.

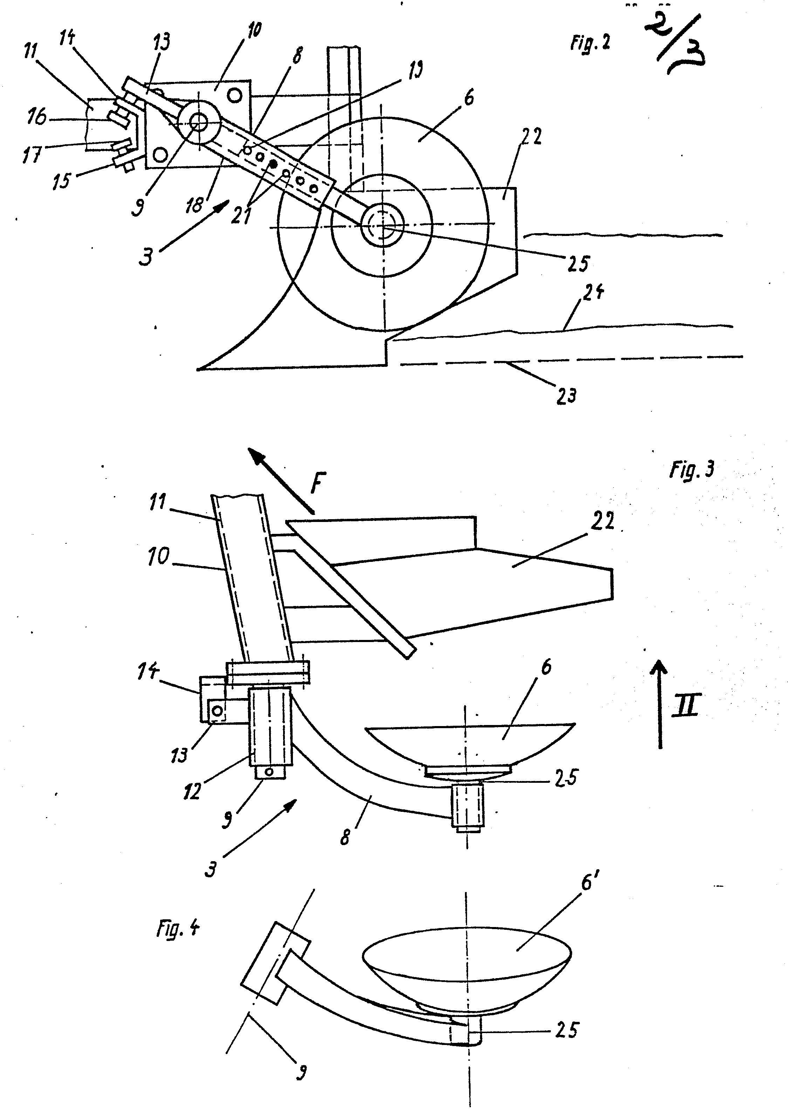

In den Fig. 2 und 3 ist ein Ausführungsbeispiel eines Zusatzpflugkörpers 3 dargestellt, der aus einem Arm 8 besteht, der mit seinem einen Ende drehbar um eine Achse 9 gelagert ist, die am hinteren Ende 10 eines Pflugrahmens 11 eines Drehpfluges befestigt ist.

Der Arm 8 ist mit einer Buchse 12 versehen, die über die Achse 9 greift und eine Lasche 13 aufweist, die an einem am Pflugrahmen 11 angebrachten Anschlag 14 in der Arbeitsstellung zur Auflage kommt. Der Pfeil II in Fig. 3 gibt die Richtungen an, in der Fig. 2 gesehen wird.

Wie insbesondere aus Fig. 2 zu ersehen ist, sind zwei Anschläge 14, 15 am hinteren Ende des Pflugrahmens 11 vorgesehen, die jeweils für die Festlegung einer Arbeitsstellung des Zusatzpflugkörpers 3 dienen. Die Anschläge 14, 15 sind einstellbar, und zwar mittels Schrauben 16, 17. Hierdurch ist es möglich, die Arbeitsiefe des Zusatzpflug- körpers 3 einstellbar zu machen. Der Arm 8 besteht aus zwei Teilen 18, 19, von denen das Teil 19 teleskopisch in Teil 18 geführt ist. Die Festlegung der beiden Teile gegeneinander erfolgt mittels eines Bolzens 20, der durch eine der Bohrungen 21 im Teil 18 und Teil 19 gesteckt ist. Die Arbeitstiefe des Pflugkörpers wie auch seine Lage relativ zum letzten Pflugkörper 22 des nicht weiter dargestellten Drehpfluges sind somit in weiten Bereichen einstellbar. In Fig. 2 ist die Furchensohle des letzten Pflugkörpers 22 mit 23 bezeichnet, während die Furchensohle des Schneidwerkzeuges 6 des Zusatzpflugkörpers 3 mit 24 bezeichnet ist. Der Zusatzpflugkörper 3 schneidet somit um einen bestimmten Betrag höher, wie er anhand der Fig. 1 erläutert worden ist. Diese Einstellung wird immer dann gewählt, wenn ein überbreiter Schlepperreifen in der Furche fahren soll.

Das Schneidwerkzeug 6 ist in Form einer gewölbten Scheibe ausgebildet, die um ihre Achse 25 drehbar am Arm 8 befestigt ist.

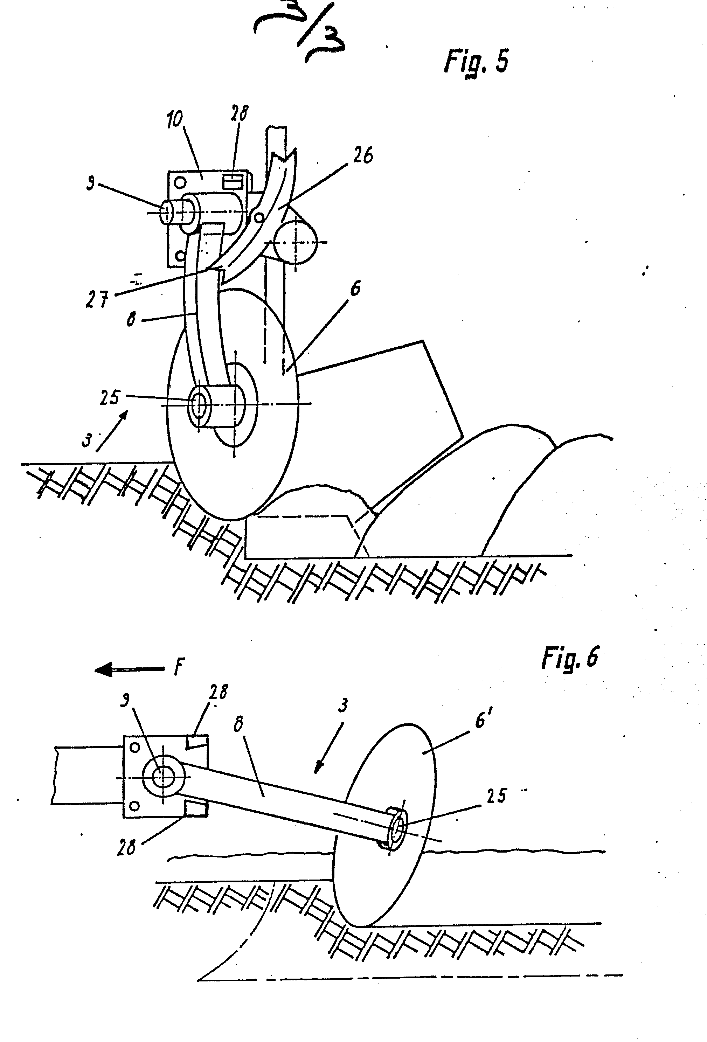

Bei dem Ausführungsbeispiel nach den Fig. 2 und 3 sind die beiden Achsen 25 und 9 parallel zueinander angeordnet. Wie das Ausführungsbeispiel nach Fig. 4 zeigt, können die Achsen jedoch auch in einem spitzen Winkel zueinander angeordnet werden. Hierdurch erreicht man eine günstigere Stellung der Scheibe 6' für die Bodenbearbeitung (siehe Fig.1).

Bei dem in den Fig. 2 und 3 gezeigten Ausführungsbeispiel schwenkt der Zusatzpflugkörper 3 synchron mit der Drehbewegung vorn herum. Beim Anheben des Pflugrahmens 11 schwenkt der Arm 8 nach unten und beim Wenden des Pflugrahmens synchron mit der Wendebewegung zur anderen Seite und legt sich dann auf dem gegenüberliegenden Anschlag 15 ab.

Bei dem in Fig. 5 gezeigten Ausführungsbeispiel sind gleiche Teile mit gleichen Bezugszeichen versehen. Der Unterschied zu dem Ausführungsbeispiel nach den Fig. 2 und 3 besteht darin, daß der Zusatzpflugkörper 3 nicht vorn herum, sondern hinten herum wegschwenkt. Zu diesem Zweck sind die beiden Anschläge 26, 27 schwenkbar am Pflugrahmen 11 angeordnet, so daß diese aufgrund ihres Eigengewichtes beim Drehen des Pflugrahmens 11 wegschwenken und so gestatten, daß der Arm 8 von seiner einen Arbeitsstellung in die andere Arbeitsstellung schwenkt. Anschließend verschwenken die Anschläge 26, 27 wieder, so daß die Arbeitsstellung dann durch den Anschlag 26 fixiert wird. Am Pflugrahmen sind des weiteren zwei Anschläge 28 vorgesehen, von denen lediglich der obere Anschlag 28 sichtbar ist. Der untere Anschlag wird durch den Arm 8 verdeckt. Diese Anschläge 28, die vorteilhaft auch einstellbar ausgebildet sind, dienen dazu, auch beim angehobenen Pflugrahmen 11 sicherzustellen, daß der Arm 8 seine geneigte Arbeitslage behält. So ist sichergestellt,daß die Schwenkung des Zusatzpflugkörpers 3 von der einen in die andere Arbeitsstellung in etwa synchron mit der Drehbewegung des Pflugrahmens erfolgt.

Bei dem Ausführungsbeispiel nach Fig. 6 sind wiederum gleiche Teile mit gleichen Bezugszeichen versehen. Bei dem Ausführungsbeispiel ist die Achse 9 so weit vom Schneidwerkzeug 6 entfernt angeordnet, daß sich dieses von selbst in den Boden einzieht. In diesem Fall kann auf einen Klinkenmechanismus mit den Anschlägen 27, 28 verzichtet werden. Der Zusatzpflugkörper nach Fig. 6 schwenkt gleichfalls wie der nach Fig. 5 hinten herum.

Das in Fig. 7 gezeigte Ausführungsbeispiel entspricht im wesentlichen dem in den Fig. 2 und 3 dargestellt, wobei hier jedoch im Unterschied zu dem Ausführungsbeispiel nach Fig. 2 und 3 das Schneidwerkzeug nicht als rotierende Scheibe, sondern als drehfest angeordnetes Streichblech ausgebildet ist, das relativ zum Arm 8 symmetrisch ausgebildet ist, so daß dieses für beide Arbeitsstellungen einsetzbar ist.

Ansprüche:

1. Zusatzpflugkörper für Drehpflüge, insbesondere für die Verbreiterung der vom letzten Pflugkörper des Drehpfluges geschnittenen Furche, dadurch gekennzeichnet, daß der Zusatzpflugkörper (3) an einem Arm (8) befestigt ist, der seinerseits über eine Schwenkachse (9) an dem Pflugrahmen (11) des Drehpfluges anschließbar ist, daß der Schwenkbereich des Armes (8) durch Anschläge (14, 15 ; 26, 27; 28) begrenzt ist, die die Arbeitsstellung des Zusatzpflugkörpers (3) bestimmen und der Zusatzpflugkörper (3) beim Wenden der Pflugkörper (22) des Drehpfluges selbsttätig von der einen Arbeitsstellung in die andere schwenkt und daß die Arbeitsflächen des Schneidwerkzeuges (6) für beide Arbeitsrichtungen ausgelegt sind.

2. Zusatzpflugkörper nach Anspruch 1, dadurch gekennzeichnet, daß die Anschläge (14, 15; 26, 27; 28) einstellbar ausgebildet sind.

3. Zusatzpflugkörper nach Anspruch 1 oder 2, dadurch gekennzeichnet, daß die Anschläge (26, 27) in Form eines Klinkmechanismusses ausgebildet sind, der den Arm nach Einleiten der Drehung des Pflugrahmens freigibt und nach Schwenkung in die gegenüberliegende Stellung einen Anschlag für den Arm (8) bildet.

4. Zusatzpflugkörper nach einem der Ansprüche 1 bis 3, dadurch gekennzeichnet, daß das Schneidwerkzeug (6) des Zusatzpflugkörpers (3) als Scheibe, vorzugsweise runde Hohlscheibe, ausgebildet ist.

5. Zusatzpflugkörper nach Anspruch 4, dadurch gekennzeichnet, daß das Schneidwerkzeug (6) als Hohlscheibe
ausgebildet ist.

6. Zusatzpflugkörper nach Anspruch 4 oder 5, dadurch gekennzeichnet, daß die Scheibe drehbar am Arm (8) gelagert
ist.

7. Zusatzpflugkörper nach einem der Ansprüche 4 bis 6,
dadurch gekennzeichnet, daß die Achse (25) des Schneidwerkzeuges (6) einen spitzen Winkel zur Achse (9) einschließt.

8. Zusatzpflugkörper nach einem der Ansprüche 1 bis 3,
dadurch gekennzeichnet, daß das Schneidwerkzeug (6) des
Zusatzpflugkörpers (3) die Form eines symmetrisch ausgebildeten Streichbleches aufweist.

9. Zusatzpflugkörper nach einem der Ansprüche 1 bis 8,
dadurch gekennzeichnet, daß die Länge des Armes (8) einstellbar ist.

0199113

Fig. 1

Fig. 7

Fig. 2

Fig. 3

Fig. 4

## Fig. 5

## Fig. 6